# EUROPÄISCHE PATENTSCHRIFT

(11) **EP 2 313 675 B1**
(45) Veröffentlichungstag und Bekanntmachung des Hinweises auf die Patenterteilung: **15.08.2012**
(21) Anmeldenummer: 09779998.5
(22) Anmeldetag: 29.06.2009
(51) Int. Cl.: F16K 31/40

(54) **VENTILVORRICHTUNG SOWIE VERFAHREN ZUM BETREIBEN EINER VENTILVORRICHTUNG**
VALVE DEVICE AND METHOD FOR OPERATING A VALVE DEVICE
DISPOSITIF DE SOUPAPE ET PROCÉDÉ POUR LE FONCTIONNEMENT D'UN DISPOSITIF DE SOUPAPE

(30) Priorität: 19.08.2008 DE 102008041328
(43) Veröffentlichungstag der Anmeldung: 27.04.2011
(73) Patentinhaber: Robert Bosch GmbH, 70442 Stuttgart (DE)
(72) Erfinder: PFETZER, Johannes, 77815 Buehl (DE); DROLL, Katharina, 77815 Buehl (DE)
(86) Internationale Anmeldenummer: PCT/EP2009/058095
(87) Internationale Veröffentlichungsnummer: WO 2010/020455

(56) Entgegenhaltungen:
- DE-A1- 2 527 748
- DE-U1- 29 912 814
- US-A- 3 797 526
- US-A- 5 048 790

## Beschreibung

Die Erfindung betrifft eine Ventilvorrichtung mit einer Fluidverbindung zwischen mindestens einem Zulauf und mindestens einem Ablauf, welche von einem Fluid in einer Offenstellung eines vorsteuerbaren Steuerventils durchströmbar und in einer Geschlossenstellung unterbrochen ist, wobei zur Verlagerung des Steuerventils in die Geschlossenstellung Fluiddruck in einer an das Steuerventil angrenzenden Druckkammer aufbaubar ist, ein Druckentlasten der Druckkammer durch Öffnen einer Vorsteuerungsvorrichtung vorgesehen ist und bei druckentlasteter Druckkammer das Steuerventil unter Verwendung einer schaltbaren Magneteinrichtung in die Offenstellung verlagerbar ist. Zudem ist das Öffnen der Vorsteuerungsvorrichtung mittels der dem Steuerventil zugeordneten Magneteinrichtung vorgesehen, und der Fluiddruck in der Druckkammer ist bei geschlossener Vorsteuerungsvorrichtung über eine Ffuidzufuhreinrichtung aufbaubar. Die Erfindung betrifft ferner ein Verfahren zum Betreiben einer Ventilvorrichtung.

### Stand der Technik

Ventilvorrichtungen der eingangs genannten Art sind beispielsweise aus der US 5 048 790 A, der US 3 797 526 A oder der DE 299 12 814 U 1 bekannt. Üblicherweise ist die Fluidverbindung zwischen Zulauf und Ablauf der Ventilvorrichtung mittels des vorsteuerbaren Steuerventils unterbrechbar, wobei das Steuerventil im Wesentlichen von Fluiddruck betätigbar ist. Dazu werden Differenzkräfte verwendet, die im Wesentlichen durch Druckunterschiede oder durch auf unterschiedlich große Flächen wirkende Drücke entstehen. Häufig weisen vorsteuerbare Steuerventile zur Druckentlastung eine Membran oder einen zweiten Ventilsitz auf. Die Membran ist allerdings äußerst empfindlich gegenüber Verschmutzung und Druckspitzen. Ist ein zweiter Ventilsitz vorhanden, so müssen entweder die beiden Ventilsitze oder die dazugehörigen Schließkörper in ihrer Position zueinander aufwendig justiert werden. Bei dieser Ausführung ergeben sich zusätzlich bei geringen Drücken und tiefen Temperaturen große Reibwerte, wodurch die zur Betätigung verwendete Magneteinrichtung ausreichend groß dimensioniert sein muss.

### Offenbarung der Erfindung

Demgegenüber weist die Ventilvorrichtung mit den in Anspruch 1 genannten Merkmalen den Vorteil auf, dass ein einfacher Aufbau der Ventilvorrichtung realisiert ist, der zudem unempfindlich gegen Verschmutzung ist und keine hohen Fertigungstoleranzen voraussetzt. Erfindungsgemäß ist vorgesehen, dass das Steuerventil eine Fluidzufuhreinrichtung aufweist und dass die Fluidzufuhreinrichtung über eine siebartige Rückhaltevorrichtung und eine Drossel zur Durchflussbegrenzung verfügt Insbesondere bei einer geschlossenen Vorsteuerungsvorrichtung ist der Fluiddruck in der Druckkammer über die Fluidzufuhreinrichtung aufbaubar. Dies geschieht, indem Fluid über die Fluidzufuhreinrichtung der Druckkammer zugeführt wird. Das Fluid kann infolge der Drossel nicht beliebig schnell in die Druckkammer einströmen, um dort Fluiddruck aufzubauen. Es ist vielmehr vorgesehen, dass über die Drossel ein zeitverzögertes Füllen der Druckkammer mit Fluid, das heißt Aufbauen des Fluiddrucks, durchführbar ist. Das Aufbauen des Fluiddrucks kann dabei vorteilhaft mit Fluid aus dem Zulauf erfolgen, das heißt, dass die Fluidzufuhreinrichtung in Fluidverbindung mit dem Zulauf steht. Mittels der siebartigen Rückhalteeinrichtung kann ferner Schmutz daran gehindert werden, in die Druckkammer einzudringen und diese, beziehungsweise die Vorsteuerungsvorrichtung, in ihrer Funktion einzuschränken. Die siebartige Rückhalteeinrichtung kann beispielsweise so ausgelegt und/oder angeordnet sein, dass bei geöffnetem Steuerventil, das heißt bei bestehender Fluidverbindung von Zulauf zu Ablauf, das durch die Ventilvorrichtung strömende Fluid bereits herausgefilterte und sich in der Rückhalteeinrichtung befindliche Partikel aus dieser ausschwemmt und so ein Verstopfen der Rückhalteeinrichtung verhindert. Je nach Verschmutzungsgrad des Fluids könnte es beispielsweise möglich sein, dass die Vorsteuerungsvorrichtung verstopft und damit ein Vorsteuern des Steuerventils nicht mehr oder nur noch eingeschränkt möglich Ist. Aus diesem Grund ist es vorteilhaft, die Rückhalteeinrichtung vorzusehen, um dem Eindringen von Schmutz in die Druckkammer vorzubeugen. Diese kann sowohl der Fluidzufuhreinrichtung als auch den Zuführöffnungen zugeordnet sein. Die Rückhalteeinrichtung soll zumindest grobe Partikel aus dem in die Druckkammer einströmenden Fluid ausfiltern.

Eine Weiterbildung der Erfindung sieht vor, dass das Verlagern des Steuerventils durch an dem Steuerventil wirkende Differenzkräfte vorgesehen ist. Das Verlagern geschieht also nur teilweise durch die mittels der Magnetvorrichtung aufgebrachten Kräfte. Vielmehr kann mittels der Vorsteuerungsvorrichtung erreicht werden, dass beispielsweise an dem Steuerventil eine Kraft wirkt, die dieses entweder in die Offenstellung oder die Geschlossenstellung bewegen. Die Kraft kann eine Differenzkraft sein, die zum einen von unterschiedlichen Drücken verursacht wird und/oder aufgrund von unterschiedlich großen mit Druck beaufschlagten Flächen vorliegt.

Eine Weiterbildung der Erfindung sieht vor, dass die Geschlossenstellung des Steuerventils bei abgeschalteter Magneteinrichtung vorliegt. Die Magneteinrichtung ist so ausgelegt, dass sie das Steuerventil von der Offenstellung in die Geschlossenstellung verlagert, sobald sie aktiviert wird. Bei abgeschalteter Magneteinrichtung wird die Druckkammer nicht druckentlastet, sodass der Fluiddruck aufbaubar ist. Liegt in der Druckkammer Fluiddruck vor, so kann das Steuerventil in die Geschlossenstellung verlagert werden. Dies kann beispielsweise aufgrund des Fluiddrucks geschehen, welcher auf eine Dichtvorrichtung des Steuerventils wirkt. Alternativ kann ein Federelement vorgesehen sein, welches bei abgeschalteter Magneteinrichtung die Vorsteuerungsvorrichtung schließt und/oder das Steuerventil in die Geschlossenstellung bewegt.

Eine Weiterbildung der Erfindung sieht vor, dass das Steuerventil die Vorsteuerungsvorrichtung aufweist. Die Vorsteuerungsvorrichtung ist also direkt an dem Steuerventil vorgesehen. Dies ist vorteilhaft, da somit der Aufbau der Ventilvorrichtung einfach gehalten werden kann, obwohl sowohl das Steuerventil als auch die Vorsteuerungsvorrichtung mittels der Magneteinrichtung betätigt werden. Es ist also keine aufwendige Mechanik notwendig, um die beiden Vorrichtungen mittels der Magneteinrichtung zu betätigen. Weiterhin müssen keine weiteren Fluidkanäle in einem Gehäuse der Ventilvorrichtung vorgesehen sein, um das Druckentlasten der Druckkammer zu bewerkstelligen.

Eine Weiterbildung der Erfindung sieht vor, dass das Steuerventil aufgrund des Fluiddrucks in der Geschlossenstellung fixierbar ist. Das Steuerventil kann also nicht bei Vorliegen eines sehr hohen oder sehr niedrigen Fluiddrucks ohne Betätigung der Magneteinrichtung geöffnet werden. Vielmehr liegt eine selbstdichtende Wirkung des Steuerventils vor, solange der Fluiddruck auf der Zulaufseite mindestens so hoch ist wie der auf der Ablaufseite. Das Steuerventil wird also durch den Fluiddruck in die Geschlossenstellung gedrängt und dort gehalten. Es kann vorgesehen sein, dass die Ventilvorrichtung ein stromlos geschlossenes Magnetventil mit Vorsteuerung ausbildet. Das bedeutet, dass die Ventilvorrichtung schließt, sobald die Magneteinrichtung abgeschaltet ist und solange in der Geschlossenstellung bleibt, bis die Magneteinrichtung aktiviert wird.

Eine Weiterbildung der Erfindung sieht vor, dass das Druckentlasten der Druckkammer in Richtung Ablauf vorgesehen ist. Das Druckentlasten wird also so durchgeführt, dass das Fluid innerhalb der Ventilvorrichtung verbleibt. Es ist nicht vorgesehen, das Fluid in die Umgebung der Ventilvorrichtung zu entlassen. Bei dem Druckentlasten der Druckkammer liegt eine Fluidverbindung, insbesondere mit geringem Querschnitt, zwischen der Druckkammer und dem Ablauf der Ventilvorrichtung vor. Die Fluidverbindung kann mittels einer geringen Kraft von der Magnetvorrichtung durch Öffnen der Vorsteuerungsvorrichtung hergestellt werden.

Eine Weiterbildung der Erfindung sieht vor, dass die Druckkammer mittels einer Dichtvorrichtung, insbesondere einer Topfmanschette, von dem Zulauf zumindest teilweise fluidtechnisch getrennt ist. Das Fluid kann somit nicht ungehindert von dem Zulauf in die Druckkammer einströmen. Auf diese Weise kann in der Druckkammer während der Druckentlastung ein niedrigerer Druck vorliegen als in dem Zulauf der Ventilvorrichtung. Es ist nicht notwendig, dass die Dichtvorrichtung eine vollständige Abdichtung der Druckkammer bewirkt. Sie muss jedoch so ausgelegt sein, dass ein Druckentlasten der Druckkammer möglich ist, und dass der Fluiddruck in der Druckkammer während des Druckentlastens in Richtung des Ablaufs schneller abbaubar ist, wie er, beispielsweise durch eine nicht vollständige fluidtechnische Trennung der Druckkammer von dem Zulauf mittels der Dichtvorrichtung, wieder aufgebaut werden kann. Die Dichtvorrichtung kann vorteilhaft als Topfmanschette oder als elastischer Abstreifer ausgeführt sein.

Eine Weiterbildung der Erfindung sieht vor, dass die Vorsteuerungsvorrichtung ein Vorsteuerventil mit einem an dem Steuerventil angeordneten Vorsteuerventilsitz und/oder einen in dem Steuerventil verlaufenden Fluidablaufkanal zur Druckentlastung aufweist. Die Druckentlastung der Druckkammer wird somit über das Vorsteuerventil und/oder den Fluidablaufkanal realisiert. Das Vorsteuerventil ist an dem Steuerventil angeordnet und ermöglicht das Druckentlasten der Druckkammer. Das Vorsteuerventil ist so an dem Steuerventil angeordnet, dass es eine Fluidverbindung zu der Druckkammer aufweist und/oder in dieser angeordnet ist. In dem Steuerventil kann eine Vorrichtung vorgesehen sein, welche das Vorsteuerventil betätigt, sobald die Magneteinrichtung aktiviert ist. Das Steuerventil kann ebenso den Fluidablaufkanal aufweisen. Dieser verläuft in dem Steuerventil. Dabei stellt der Fluidablaufkanal bei geöffneter Vorsteuerungsvorrichtung eine Fluidverbindung von der Druckkammer beispielsweise zu dem Ablauf der Ventilvorrichtung her. Das Fluid kann also aus der Druckkammer durch den Fluidablaufkanal ablaufen und die Druckkammer so druckentlastet werden. Vorteilhaft erfolgt dabei ein Druckentlasten in Richtung des Ablaufs. Der Fluidablaufkanal kann als Bohrung in dem Steuerventil ausgebildet sind, die die Druckkammer mit der Ablaufseite des Steuerventils verbindet. Es kann vorgesehen sein, dass ein Bereich des Fluidablaufkanals den Vorsteuerventilsitz des Vorsteuerventils ausbildet. Das Vorsteuerventil kann also an beziehungsweise in dem Fluidablaufkanal angeordnet sein beziehungsweise an diesen anschließen.

Eine Weiterbildung der Erfindung sieht vor, dass das Vorsteuerventil kleiner ausgebildet ist als das Steuerventil. Da die aus dem Fluiddruck resultierende Kraft proportional zu der Fläche eines mit dem Fluiddruck beaufschlagten Ventils ist, lässt sich das Ventil umso leichter bewegen, je kleiner die dem Fluid ausgesetzte Oberfläche ist. Daher ist das Vorsteuerventil kleiner als das Steuerventil beziehungsweise weist eine kleinere, dem Fluiddruck ausgesetzte Fläche auf. Daher wird deutlich weniger Kraft benötigt, um das Vorsteuerventil zu öffnen, als für das Steuerventil nötig wäre. Aus diesem Grund reicht eine klein dimensionierte Magneteinrichtung aus, um das Vorsteuerventil zu betätigen, damit die Druckkammer zu druckentlasten und den Fluiddruck, welcher das Steuerventil beaufschlagt, abzubauen. Anschließend kann die Magnetvorrichtung und/oder eine durch den abgebauten Fluiddruck an dem Steuerventil anliegende Differenzkraft auf einfache Weise das Steuerventil in die Offenstellung bewegen. Das einfach von der Magneteinrichtung zu betätigende Vorsteuerventil dient also dazu, die Betätigung des Steuerventils zu vereinfachen.

Eine Weiterbildung der Erfindung sieht vor, dass die Fluidzufuhreinrichtung bei geöffneter Vorsteuerungsvorrichtung einen geringeren Fluiddurchsatz als der Fluidablaufkanal ausweist. Das Fluid läuft also mit einem geringeren Durchsatz in die Druckkammer ein, als es durch den Fluidablaufkanal aus diesem abgeführt werden kann. Auf diese Weise ist es möglich, den Fluiddruck in der Druckkammer abzubauen und die Druckentlastung derselben zu erreichen. Dies trifft natürlich nur bei geöffneter Vorsteuerungsvorrichtung zu, da nur in diesem Fall Fluid durch den Fluidablaufkanal abgeführt werden kann.

Eine Weiterbildung der Erfindung sieht vor, dass das Vorsteuerventil über eine in dem Steuerventil angeordnete Hubstange von der Magneteinrichtung betätigbar ist, wobei der Hubstange mindesten ein Mitnahmeelement zugeordnet ist, mittels welchem das Steuerventil bei zumindest teilsweise geöffnetem Vorsteuerventil betätigbar ist. Die Hubstange soll so ausgelegt sein, dass zunächst das Vorsteuerventil und anschließend das Steuerventil geöffnet wird, sobald die Magneteinrichtung aktiviert ist. Dies wird durch das Mitnahmeelement erreicht, welches an der Hubstange angeordnet ist. Es kann beispielsweise vorgesehen sein, dass die Hubstange eine direkte Verbindung von der Magneteinrichtung zu dem Vorsteuerventil ist und dieses bei aktivierter Magneteinrichtung direkt betätigt. Das Vorsteuerventil wird also mitsamt der Hubstange verschoben. Ist eine gewisse Verlagerung des Vorsteuerventils erreicht, so kann das Mitnahmeelement beispielsweise auf das Steuerventil aufsetzen und dieses somit zusammen mit dem Vorsteuerventil verlagern. Auf diese Weise wird erreicht, dass zunächst das Vorsteuerventil geöffnet und damit die Druckkammer druckentlastet wird. Bei druckentlasteter Druckkammer reicht die relativ geringe Kraft der Magneteinrichtung und/oder die durch den abgebauten Fluiddruck an dem Steuerventil anliegende Differenzkraft aus, um auch das Steuerventil in die Offenstellung zu bewegen. Die Ausbildung mit dem Mitnahmeelement, welches an der Hubstange angeordnet ist, stellt eine sehr einfache, aber effektive Ausbildung der Ventilvorrichtung dar.

Eine Weiterbildung der Erfindung sieht vor, dass das Steuerventil stromabwärts eines Steuerventilsitzes kronenförmig angeordnete Ausströmungsöffnungen aufweist. Die Ausströmungsöffneungen stehen in Fluidverbindung mit der Druckkammer. Bei geöffneter Vorsteuerungsvorrichtung kann somit Fluid durch die Ausströmungsöffnungen austreten. Dabei sind die Ausströmungsöffnungen beispielsweise kronenförmig angeordnet. Sie sind also über den Umfang des Steuerventils verteilt so angeordnet, dass einzelne Ausströmungsöffnungen vorliegen.

Eine Weiterbildung der Erfindung sieht vor, dass das Vorsteuerventil in einer Offenstellung auf einem, insbesondere in der Druckkammer angeordneten, Anschlagelement aufliegt. Sobald das Vorsteuerventil seine Offenstellung erreicht hat, liegt es also auf dem Anschlagelement auf, welches somit einen Endanschlag für das Vorsteuerventil bildet. Das Anschlagelement ist dabei beispielsweise in der Druckkammer angeordnet. Das Vorsteuerventil kann beim Öffnen in die Druckkammer eintreten und insbesondere dort auf dem Anschlagelement aufliegen.

Eine Weiterbildung der Erfindung sieht vor, dass das Anschlagelement elastisch, insbesondere aus einem Elastomerwerkstoff, ausgebildet ist. Durch die elastische Ausbildung des Anschlagelements kann das Vorsteuerventil sanft abgefangen werden und das Betriebsgeräusch der Ventilvorrichtung somit deutlich verringert werden. Bei dem Öffnen des Vorsteuerventils entsteht also kein deutlich hörbares Geräusch, da die kinetische Aufschlagsenergie des Vorsteuerventils durch das Anschlagelement abgebaut wird. Das Anschlagelement kann beispielsweise aus einem Elastomerwerkstoff bestehen. Dies bietet den Vorteil, das es gegenüber den üblicherweise in der Ventilvorrichtung vorgesehen Fluiden beständig ist und gleichzeitig sehr gute Dämpfungseigenschaften aufweist.

Die Erfindung umfasst ferner ein Verfahren zum Betreiben einer Ventilvorrichtung, insbesondere gemäß den vorstehenden Ausführungen, wobei die Ventilvorrichtung eine Fluidverbindung zwischen mindestens einem Zulauf und mindestens einem Ablauf aufweist, die von einem Fluid in einer Offenstellung eines vorsteuerbaren Steuerventils durchströmt werden kann und in einer Geschlossenstellung unterbrochen ist, wobei zur Verlagerung des Steuerventils in die Geschlossenstellung Fluiddruck in einer an das Steuerventil angrenzenden Druckkammer aufgebaut wird. Darüber hinaus ist vorgesehen, die Druckkammer durch Öffnen einer Vorsteuerungsvorrichtung zu druckentlasten und bei druckentlasteter Druckkammer das Steuerventil unter Verwendung einer schaltbaren Magneteinrichtung in die Offenstellung zu verlagern, wobei das Öffnen der Vorsteuerungsvorrichtung mittels der dem Steuerventil zugeordneten Magneteinrichtung durchgeführt wird und der Fluiddruck in der Druckkammer (24) bei geschlossener Vorsteuerungsvorrichtung (3) über eine Fluidzufuhreinrichtung (34) aufgebaut wird. Dabei ist erfindungsgemäß vorgesehen, dass das Steuerventil (2) die Fluidzufuhreinrichtung (34) aufweist und dass die Fluidzufuhreinrichtung (34) über eine siebartige Rückhaltevorrichtung (35) und eine Drossel (36) zur Durchflussbegrenzung verfügt.

### Kurze Beschreibung der Zeichnungen

Die Erfindung wird im Folgenden anhand der in der Zeichnung dargestellten Ausführungsbeispiele näher erläutert, ohne dass eine Beschränkung der Erfindung erfolgt. Es zeigen:
- Figur 1: eine Ventilvorrichtung mit einem vorsteuerbaren Steuerventil, einer Vorsteuerungsvorrichtung und einer schaltbaren Magneteinrichtung, mit welcher sowohl das Steuerventil als auch die Vorsteuerungsvorrichtung betätigbar ist, in einer Geschlossenstellung,
- Figur 2: die Ventilvorrichtung gemäß Figur 1, wobei die Vorsteuerungsvorrichtung geöffnet ist,
- Figur 3: die aus Figur 1 bekannte Ventilvorrichtung, wobei sowohl die Vorsteuerungsvorrichtung als auch das Steuerventil geöffnet sind, und
- Figur 4: die aus den vorhergehenden Figuren bekannte Ventilvorrichtung, wobei das Steuerventil geöffnet und die Vorsteuerungsvorrichtung geschlossen ist.

### Ausführungsform(en) der Erfindung

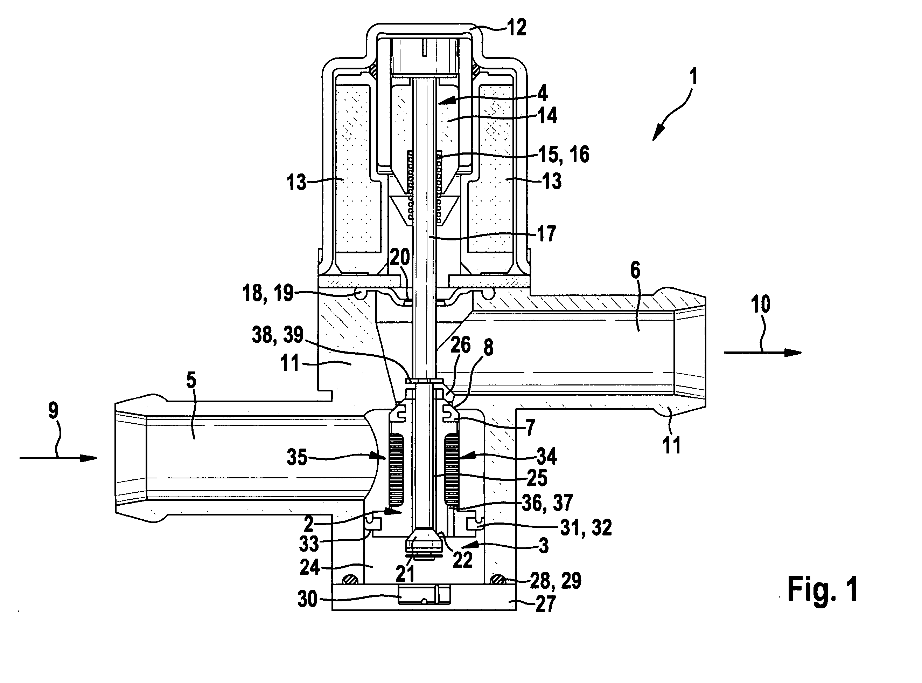

Die Figur 1 zeigt eine Ventilvorrichtung 1 mit einem Steuerventil 2, einer Vorsteuerungsvorrichtung 3 und einer schaltbaren Magneteinrichtung 4, mittels welcher das Steuerventil 2 und die Vorsteuerungsvorrichtung 3 betätigbar sind. In dem in der Figur 1 dargestellten Zustand blockiert das Steuerventil 2 eine Fluidverbindung zwischen einem Zulauf 5 und einem Ablauf 6, befindet sich also in einer Geschlossenstellung. In dieser liegt ein Dichtkegel 7 des Steuerventils 2 auf einem Steuerventilsitz 8 auf und verhindert somit das Fließen von Fluid von dem Zulauf 5 hin zu dem Ablauf 6. Das Fluid kann sich also nicht in Richtung der Pfeile 9 und 10 bewegen. Zulauf 5 und Ablauf 6 können beispielsweise in einem einstückig ausgeführten Strömungsgehäuse 11 angeordnet sein, an welches ein Steuergehäuse 12 anschließt, in welchem die Magneteinrichtung 4 angeordnet ist. Diese besteht aus Magnetspulen 13 und einem Magnetanker 14. Bei aktivierter Magneteinrichtung 4 erzeugen die Magnetspulen 13 ein Magnetfeld, sodass der Magnetanker 14 in Richtung des Strömungsgehäuses 11 gedrückt wird. Dieser Bewegung wirkt eine Schließeinrichtung 15, hier als Schließfeder 16 ausgebildet, entgegen. Die Schließfeder 16 ist so dimensioniert, dass der Magnetanker 14 bei aktivierter Magneteinrichtung 4 verlagert werden kann, bei nicht aktivierter Magneteinrichtung 4 jedoch wieder in eine Ausgangsposition zurückbewegt wird. Mit dem Magnetanker 14 ist eine Hubstange 17 verbunden, welche durch die Auslenkung des Magnetankers 14 weiter in das Strömungsgehäuse 11 hinein verlagert wird. Zwischen Strömungsgehäuse 11 und Steuergehäuse 12 ist eine als Dichtmanschette 18 ausgelegte Dichtvorrichtung 19 vorgesehen, welche über eine an die Hubstange 17 anschließende Abstreiflippe 20 verfügt. Die Dichtmanschette 18 verhindert zunächst das Austreten von Fluid aus der Verbindungsstelle zwischen Strömungsgehäuse 11 und Steuergehäuse 12. Über die Abstreiflippe 20 wird verhindert, dass Fremdpartikel, insbesondere Verschmutzung, aus dem Fluid in das Steuergehäuse 12 eindringen und möglicherweise die Magnetspule 13 beziehungsweise den Magnetanker 14 beschädigen können. Mittels der Hubstange 17 ist sowohl das Steuerventil 2 als auch die Vorsteuerungsvorrichtung 3 in geöffnete Stellung verlagerbar. Zu diesem Zweck ist die Hubstange 17 direkt an ein der Vorsteuerungsvorrichtung 3 zugeordnetes Vorsteuerventil 21 angeschlossen, welches in einer Geschlossenstellung in einem Vorsteuerventilsitz 22 sitzt, welcher an dem Steuerventil 2 angeordnet ist. Das Vorsteuerventil 21 ist dabei beispielsweise als Dichtkegel 23 ausgebildet. Der Dichtkegel 23 dichtet in der Geschlossenstellung der Vorsteuerungsvorrichtung 3 eine Fluidverbindung zwischen einer Druckkammer 24 und einem Fluidablaufkanal 25 ab, welcher in Fluidverbindung zu dem Ablauf 6 steht. Dieser Ablauf wird dabei auf der der Druckkammer 24 abgewandten Seite des Steuerventils 2 über kronenförmig angeordnete Ausströmöffnungen 26 hergestellt. Bei geöffneter Vorsteuerungsvorrichtung 3 kann also Fluid von der Druckkammer 24 durch den Fluidablaufkanal 25 aus den Ausströmöffnungen 26 in den Ablauf 6 ausströmen. Die Druckkammer 24 ist zumindest teilweise in dem Strömungsgehäuse 11 angeordnet, welches im Bereich der Druckkammer 24 durch eine Bodenplatte 27 verschlossen ist. Zwischen Strömungsgehäuse 11 und Bodenplatte 27 ist eine Dichtung 28 angeordnet. Die Dichtung 28 ist beispielsweise als Dichtring 29 beziehungsweise als O-Ring ausgebildet. In einer alternativen Ausführungsform sind das Strömungsgehäuse 11 und die Bodenplatte 27 einstückig ausgeführt, die Bodenplatte 27 ist also in dem Strömungsgehäuse 11 integriert. Für diese Variante ist kein Dichtring 29 notwendig.

Es kann festgehalten werden, dass das Vorsteuerventil 21 kleiner ausgebildet ist als das Steuerventil 2. In der Druckkammer 24 beziehungsweise deren Bodenplatte 27 ist ein Anschlagelement 30 vorgesehen, welches elastisch ausgebildet ist. Zu diesem Zweck ist es aus Elastomerwerkstoff gefertigt. Es ist vorgesehen, dass das Vorsteuerventil 21 bei Verlagerung in seine Offenstellung auf dem Anschlagelement 30 aufliegt. Auf diese Weise wird das Öffnungsgeräusch der Ventilvorrichtung 1 vermindert. Die Druckkammer 24 ist mittels einer Dichtvorrichtung 31, welche hier als Topfmanschette 32 ausgebildet ist, von dem Zulauf 5 fluidtechnisch getrennt. Alternativ kann die Dichtvorrichtung 31 auch als elastischer Abstreifer beziehungsweise Abstreiflippe ausgebildet sein. Die Topfmanschette 32 verhindert also, dass Fluid aus dem Zulauf 5 durch einen Spalt 33 zwischen Steuerventil 2 und Strömungsgehäuse 11 direkt in die Druckkammer 24 gelangen kann. Es kann allerdings auch vorgesehen sein, dass die Topfmanschette 32 keine vollständige Abdichtung bewirkt, sodass ein geringer Fluidstrom in die Druckkammer 24 eindringen kann. Zu diesem Zweck können beispielsweise Zuführöffnungen (nicht dargestellt) in der Topfmanschette 32 oder ein Spiel zwischen Topfmanschette 32 und Strömungsgehäuse 11 vorgesehen sein. Das Steuerventil 2 weist eine Fluidzufuhreinrichtung 34 auf, über die ein gewisser Volumenstrom von dem Zulauf 5 in die Druckkammer 24 gelangen kann. Zu diesem Zweck weist die Fluidzufuhreinrichtung 34 eine Rückhaltevorrichtung 35 sowie eine Drossel 36 auf. Letztere kann dabei als Steuerbohrung 37 ausgeformt sein. Durch die Fluidzufuhreinrichtung 34 kann Fluid von dem Zulauf 5 in die Druckkammer 24 eingebracht werden. Zunächst durchläuft das Fluid dabei die Rückhaltevorrichtung 35, welche siebartig ausgeführt ist. Dies verhindert, dass Fremdpartikel, insbesondere Schmutzpartikel, in die Druckkammer 24 gelangen können. Anschließend der Rückhaltevorrichtung 35 durchläuft das Fluid die Steuerbohrung 37, wobei die Strömungsrate des Fluids abgesenkt wird. Das bedeutet, dass nur ein begrenzter Volumenstrom in die Druckkammer 24 eingebracht wird. Dieser Volumenstrom, also die Menge des eingebrachten Fluids pro Zeiteinheit, ist geringer als der Volumenstrom, welcher bei geöffneter Vorsteuerungsvorrichtung 3 durch den Fluidablaufkanal 25 in den Ablauf 6 gelangt. Auf diese Weise wird die Druckkammer 24 bei geöffneter Vorsteuerungsvorrichtung 3 beziehungsweise geöffnetem Vorsteuerventil 21 druckentlastet, sodass in der Druckkammer 24 vorhandener Fluiddruck abgebaut wird. Ist die Vorsteuerungsvorrichtung 3 beziehungsweise das Vorsteuerventil 21 geschlossen, so kann das Fluid nicht mehr durch den Fluidablaufkanal 25 ablaufen. Da durch die Steuerbohrung 37 nur ein begrenzter Volumenstrom in die Druckkammer 24 eindringen kann, baut sich in der Druckkammer 24 nur langsam auf. Dabei wird die Vorsteuerungsvorrichtung 3 wie vorstehend beschrieben mittels der Hubstange 17 beziehungsweise der Magneteinrichtung 4 bewegt. Die Hubstange 17 weist weiterhin ein Mitnahmeelement 28 auf, welches beispielsweise als Anschlagring 39 ausgebildet sein kann. Dieser Anschlagring 39 tritt bei ausreichender Auslenkung der Hubstange 17 durch die Magneteinrichtung 4 mit dem Steuerventil 2 in Kontakt. Das bedeutet, dass bei aktivierter Magneteinrichtung 4 zunächst über die Hubstange das Vorsteuerventil 21 und anschließend bei ausreichender Auslenkung der Hubstange 17 auch das Steuerventil 2 mittels der Magneteinrichtung 4 geöffnet werden können.

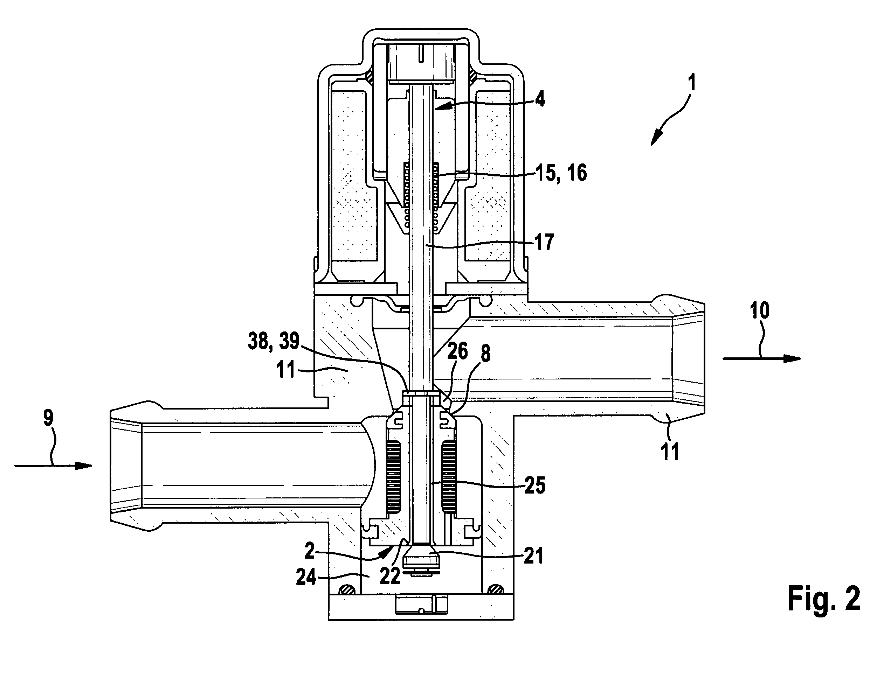

Es ergibt sich folgende Funktion der Ventilvorrichtung 1, die anhand der Figuren 1 bis 4 beschrieben werden soll: Die vorstehend beschriebene Figur 1 zeigt die Ventilvorrichtung 1 mit geschlossenem Steuerventil 2 und geschlossenem Vorsteuerventil 21. Durch das geschlossene Vorsteuerventil 21 kann das Fluid aus der Druckkammer 24 nicht durch den Fluidablaufkanal 25 in den Ablauf 6 gelangen. Es liegt also ein Fluiddruck, welcher dem Fluiddruck in dem Zulauf 5 entspricht, in der Druckkammer 24 vor. Dieser ist höher als der Fluiddruck in dem Ablauf 6. Daher wird das Steuerventil 2 von dem Fluiddruck in der Druckkammer 24 in die in der Figur 1 dargestellte Geschlossenstellung gedrängt. Es ist also kein selbstständiges Öffnen des Steuerventils 2 bei hohem Druck in dem Zulauf 5 zu erwarten. Soll die Ventilvorrichtung 1 geöffnet werden, sodass eine Fluidverbindung zwischen Zulauf 5 und Ablauf 6 besteht, das Fluid also in Richtung der Pfeile 9 und 10 strömen kann, so wird die Magneteinrichtung 4 aktiviert. Diese bewegt, wie in Figur 2 abgebildet, die Hubstange 17 entgegen der Wirkungsrichtung der Schließfeder 16 weiter in das Strömungsgehäuse 11 hinein. Die durch das Steuerventil 2 hindurchlaufende Hubstange 17 ist an ihrer der Magneteinrichtung 4 abgewandten Seite mit dem Vorsteuerventil 21 verbunden. Durch die Verlagerung der Hubstange 17 wird also das Vorsteuerventil 21 aus dem Vorsteuerventilsitz 22 gehoben, womit eine Fluidverbindung zwischen der Druckkammer 24 und dem Ablauf 6 hergestellt ist. Das in der Druckkammer 24 befindliche Fluid strömt durch den Fluidablaufkanal 25 durch das Steuerventil 2 hindurch und tritt auf dessen der Vorsteuerungsvorrichtung 3 abgewandten Ende aus den Ausströmöffnungen 26 aus. Damit ist die Druckkammer 26 druckentlastet und der in ihr vorliegende Fluiddruck sinkt. Je weiter der Fluiddruck absinkt, umso schwächer wird die Kraft, welche das Steuerventil 2 in den Steuerventilsitz 8 drückt, während eine Kraft, welche auf das Steuerventil 2 in Richtung der Offenstellung wirkt, konstant bleibt. Erstere Kraft ergibt sich aus dem in der Druckkammer 24 vorliegenden Druck und der in der Druckkammer 24 befindlichen Oberfläche des Steuerventils 2. Letztere Kraft ist die Kraft, welche der in dem Zulauf 5 herrschende Druck auf das Steuerventil 2 ausübt. Ist die Hubstange 17 ausreichend von der Magneteinrichtung 4 ausgelenkt worden, so tritt der Anschlagring 39 mit der Oberseite des Steuerventils 2 in Kontakt. Ist der Druck in der Druckkammer 24 ausreichend weit abgesunken, so reicht die Kraft der Magneteinrichtung 4 aus, um die Hubstange 17 mitsamt Steuerventil 2 und Vorsteuerventil 21 weiter in das Strömungsgehäuse 11 zu verlagern. Auf diese Weise wird das Steuerventil 2 aus dem Steuerventilsitz 8 herausgedrückt. Bei ausreichend niedrigem Druck in der Druckkammer 24 ist auch die Kraft in Richtung der Offenstellung größer als die Kraft in Richtung der Geschlossenstellung, womit ebenfalls eine Bewegung des Steuerventils 2 bewirkt wird. Die Ventilvorrichtung 1 kann daher so ausgelegt sein, dass keine oder nur eine geringe Kraft von der Magnetvorrichtung auf das Steuerventil 2 aufgebracht werden muss, um dieses in die Offenstellung zu bewegen. Die wirkenden Kräfte ergeben sich jeweils aus dem vorliegenden Druck und der Fläche, auf welche der Druck wirken kann.

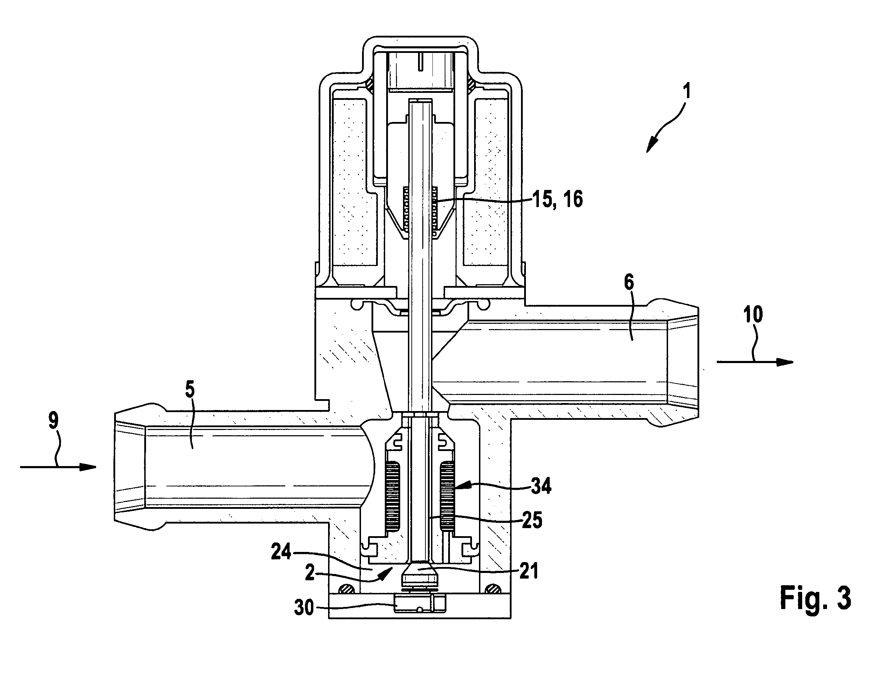

Dieser Zustand ist in Figur 3 dargestellt. Das Steuerventil 2 befindet sich nun in seiner Offenstellung. Damit ist eine Fluidverbindung zwischen Zulauf 5 und Ablauf 6 hergestellt und das Fluid kann von ersterem zu letzterem strömen. Während des Öffnungsvorgangs tritt das Vorsteuerventil 21 mit dem Anschlagelement 30 in Kontakt. Dieses ist aus elastischem Material gefertigt und verhindert so, dass das Auftreffen des Vorsteuerventils 21 ein störendes Geräusch verursacht. Der Öffnungsvorgang der Ventilvorrichtung 1 verläuft somit sehr leise. Das Vorsteuerventil 21 ist immer noch geöffnet, sodass durch die Fluidzufuhreinrichtung 34 in die Druckkammer 24 einströmendes Fluid umgehend durch den Fluidablaufkanal 25 ablaufen kann. In diesem Zustand ist die Schließfeder 16 durch die Magneteinrichtung 4 maximal gespannt. Die Magneteinrichtung 4 ist also weiterhin notwendig, um der Kraft der Schließfeder 16 entgegenzuwirken und die Ventilvorrichtung 1 beziehungsweise das Steuerventil 2 und die Vorsteuerungsvorrichtung 3 in Offenposition zu halten. Allerdings ist die von der Magneteinrichtung 4 zu erzeugende Kraft relativ gering, da lediglich die entgegenwirkende Kraft der Schließfeder 16 ausgeglichen werden muss. In dem in der Figur 3 dargestellten Zustand kann das Fluid entlang der Pfeile 9 und 10 die Ventilvorrichtung 1 ungehindert passieren.

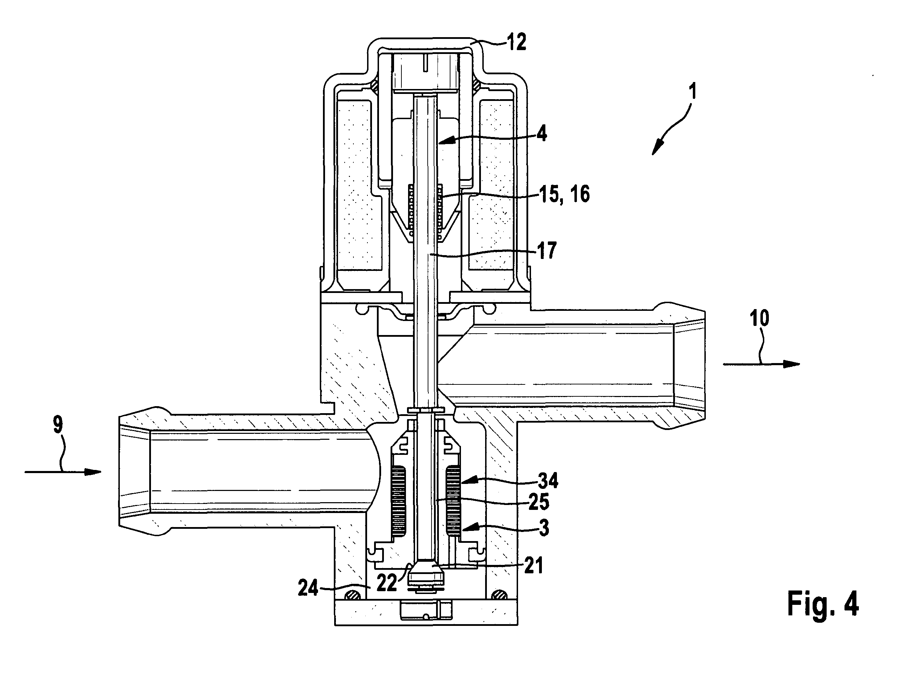

Soll die Ventilvorrichtung 1 wieder geschlossen werden, sodass das Fluid nicht mehr entlang der Pfeile 9 und 10 strömen kann, so wird die Magneteinrichtung 4 deaktiviert. Daraufhin zieht die Schließfeder 16 die Hubstange 17 wieder in Richtung des Steuergehäuses 12. Sie schließt zunächst das Vorsteuerventil 21, welches, wie in Figur 4 gezeigt, sich wieder in den Vorsteuerventilsitz 22 bewegt und somit den Fluidablaufkanal 25 verschließt. Es kann also kein Fluid mehr aus der Druckkammer 24 durch den Fluidablaufkanal 25 austreten. Sobald das Vorsteuerventil 21 in dem Vorsteuerventilsitz 22 sitzt, wird über diese Verbindung eine Kraft in Richtung Geschlossenstellung auf das Steuerventil 2 ausgeübt. Das durch das Steuerventil 2 strömende Fluid bewirkt jedoch eine Kraft, die das Steuerventil 2 zunächst in der Offenstellung hält. Da die Vorsteuerungsvorrichtung 3 nun geschlossen ist, sammelt sich das durch die Fluidzufuhreinrichtung 34 in die Druckkammer 24 strömende Fluid an, womit in der Druckkammer 34 Fluiddruck aufgebaut wird. Nach einer gewissen Zeit liegt also in der Druckkammer 24 derselbe Druck wie in dem Zulauf 5 vor. Da das Steuerventil 2 nun allseitig von demselben Fluiddruck umgeben ist, wird nur noch eine geringe Kraft benötigt, um das Steuerventil 2 in seine Geschlossenstellung zu bewegen. Diese wird von der Schließfeder 16 über die Hubstange 17 und das Vorsteuerventil 21 und/oder von einer von dem Fluiddruck verursachten Druckdifferenz auf das Steuerventil 2 aufgeprägt. Die Druckdifferenz wird von den unterschiedlich großen Flächen verursacht, auf welche der Fluiddruck wirkt. In der Druckkammer 24 ist die effektive Fläche des Steuerventils 2 beispielsweise größer als auf der dem Zulauf 5 zugewandten Seite, da dort die effektive Fläche des Steuerventils 2 durch die Vorsteuerungsvorrichtung 3 verringert ist. Das Steuerventil 2 bewegt sich somit in seine Geschlossenstellung, womit die Fluidverbindung zwischen Zulauf 5 und Ablauf 6 wieder unterbrochen ist. Sobald der Schließvorgang abgeschlossen ist, liegt wieder der in Figur 1 dargestellte Zustand vor.

Das Steuerventil 1 kann beispielsweise mit einem Spritzgießverfahren hergestellt werden. Besonders bevorzugt ist hierbei die 2k-Technik, mit welcher Dichtungen und Anschlagelement 30 in einem Arbeitsschritt hergestellt und in die Ventilvorrichtung 1 integriert werden können.

## Patentansprüche

1. Ventilvorrichtung (1) mit einer Fluidverbindung zwischen mindestens einem Zulauf (5) und mindestens einem Ablauf (6), welche von einem Fluid in einer Offenstellung eines vorsteuerbaren Steuerventils (2) durchströmbar und in einer Geschlossenstellung unterbrochen ist, wobei zur Verlagerung des Steuerventils (2) in die Geschlossenstellung Fluiddruck in einer an das Steuerventil (2) angrenzenden Druckkammer (24) aufbaubar ist, ein Druckentlasten der Druckkammer (24) durch Öffnen einer Vorsteuerungsvorrichtung (3) vorgesehen ist und bei druckentlasteter Druckkammer (24) das Steuerventil (2) unter Verwendung einer schaltbaren Magneteinrichtung (4) in die Offenstellung verlagerbar ist, wobei das Öffnen der Vorsteuerungsvorrichtung (3) mittels der dem Steuerventil (2) zugeordneten Magneteinrichtung (4) vorgesehen ist und der Fluiddruck in der Druckkammer (24) bei geschlossener Vorsteuerungsvorrichtung (3) über eine Fluidzufuhreinrichtung (34) aufbaubar ist, **dadurch gekennzeichnet, dass** das Steuerventil (2) die Fluidzufuhreinrichtung (34) aufweist und dass die Fluidzufuhreinrichtung (34) über eine siebartige Rückhaltevorrichtung (35) und eine Drossel (36) zur Durchflussbegrenzung verfügt.

2. Ventilvorrichtung nach Anspruch 1, **dadurch gekennzeichnet, dass** das Verlagern des Steuerventils (2) durch an dem Steuerventil (2) wirkende Differenzkräfte vorgesehen ist.

3. Ventilvorrichtung nach einem der vorhergehenden Ansprüche, **dadurch gekennzeichnet, dass** die Geschlossenstellung des Steuerventils (2) bei abgeschalteter Magneteinrichtung (4) vorliegt.

4. Ventilvorrichtung nach einem der vorhergehenden Ansprüche, **dadurch gekennzeichnet, dass** das Steuerventil (2) die Vorsteuerungsvorrichtung (3) aufweist.

5. Ventilvorrichtung nach einem der vorhergehenden Ansprüche, **dadurch gekennzeichnet, dass** das Steuerventil (2) aufgrund des Fluiddrucks in der Geschlossenstellung fixierbar ist.

6. Ventilvorrichtung nach einem der vorhergehenden Ansprüche, **dadurch gekennzeichnet, dass** die Druckentlastung der Druckkammer (24) in Richtung Ablauf (6) vorgesehen ist.

7. Ventilvorrichtung nach einem der vorhergehenden Ansprüche, **dadurch gekennzeichnet, dass** die Druckkammer (24) mittels einer Dichtvorrichtung (31), insbesondere einer Topfmanschette (32), von dem Zulauf (5) zumindest teilweise fluidtechnisch getrennt ist

8. Ventilvorrichtung nach einem der vorhergehenden Ansprüche, **dadurch gekennzeichnet, dass** die Vorsteuerungsvorrichtung (3) ein Vorsteuerventil (21) mit einem an dem Steuerventil (2) angeordneten Vorsteuerventilsitz (22) und/oder einen in dem Steuerventil (2) verlaufenden Fluidablaufkanal (25) zur Druckentlastung aufweist.

9. Ventilvorrichtung nach einem der vorhergehenden Ansprüche, **dadurch gekennzeichnet, dass** das Vorsteuerventil (21) kleiner ausgebildet ist als das Steuerventil (2).

10. Ventilvorrichtung nach einem der vorhergehenden Ansprüche, **dadurch gekennzeichnet, dass** die Fluidzufuhreinrichtung (34) bei geöffneter Vorsteuerungsvorrichtung (3) einen geringeren Fluiddurchsatz als der Fluidablaufkanal (25) aufweist.

11. Ventilvorrichtung nach einem der vorhergehenden Ansprüche, **dadurch gekennzeichnet, dass** das Vorsteuerventil (21) über eine in dem Steuerventil (2) angeordnete Hubstange (17) von der Magneteinrichtung (4) betätig bar ist, wobei der Hubstange (17) mindesten ein Mitnahmeelement (38) zugeordnet ist, mittels welchem das Steuerventil (2) bei zumindest teilsweise geöffnetem Vorsteuerventil (21) betätigbar ist.

12. Ventilvorrichtung nach einem der vorhergehenden Ansprüche, **dadurch gekennzeichnet, dass** das Steuerventil (2) stromabwärts eines Steuerventilsitzes (22) kronenförmig angeordnete Ausströmungsöffnungen (26) aufweist.

13. Ventilvorrichtung nach einem der vorhergehenden Ansprüche, **dadurch gekennzeichnet, dass** das Vorsteuerventil (21) in einer Offenstellung auf einem, insbesondere in der Druckkammer (24) angeordneten, Anschlagelement (30) aufliegt.

14. Ventilvorrichtung nach einem der vorhergehenden Ansprüche, **dadurch gekennzeichnet, dass** das Anschlagelement (30) elastisch, insbesondere aus einem Elastomerwerkstoff, ausgebildet ist.

15. Verfahren zum Betreiben einer Ventilvorrichtung (1), insbesondere nach einem oder mehreren der vorhergehenden Ansprüche, wobei die Ventilvorrichtung (1) eine Fluidverbindung zwischen mindestens einem Zulauf (5) und mindestens einem Ablauf (6) aufweist, die von einem Fluid in einer Offenstellung eines vorsteuerbaren Steuerventils (2) durchströmt werden kann und in einer Geschlossenstellung unterbrochen ist, wobei zur Verlagerung des Steuerventils (2) in die Geschlossenstellung Fluiddruck in einer an das Steuerventil (2) angrenzenden Druckkammer (24) aufgebaut wird, und wobei es vorgesehen ist, die Druckkammer (24) durch Öffnen einer Vorsteuerungsvorrichtung (3) zu druckentlasten und bei druckentlasteter Druckkammer (26) das Steuerventil (2) unter Verwendung einer schaltbaren Magneteinrichtung (4) in die Offenstellung zu verlagern, wobei das Öffnen der Vorsteuerungsvorrichtung (3) mittels der dem Steuerventil (2) zugeordneten Magneteinrichtung (4) durchgeführt wird und der Fluiddruck in der Druckkammer (24) bei geschlossener Vorsteuerungsvorrichtung (3) über eine Fluidzufuhreinrichtung (34) aufgebaut wird, wobei das Steuerventil (2) die Fluidzufuhreinrichtung (34) aufweist und dass die Fluidzufuhreinrichtung (34) über eine siebartige Rückhaltevorrichtung (35) und eine Drossel (36) zur Durchflussbegrenzung verfügt.

## Claims

1. Valve device (1) having a fluid connection between at least one inlet (5) and at least one outlet (6), which fluid connection can be flowed through by a fluid in an open position of a pilot-controllable control valve (2) and is interrupted in a closed position, it being possible for fluid pressure to be built up in a pressure chamber (24) which adjoins the control valve (2) in order to displace the control valve (2) into the closed position, pressure relief of the pressure chamber (24) being provided by opening of a pilot-control device (3), and, in the case of a pressure-relieved pressure chamber (24), it being possible for the control valve (2) to be displaced into the open position with the use of a switchable magnet device (4), the opening of the pilot-control device (3) being provided by means of the magnet device (4) which is assigned to the control valve (2), and it being possible for the fluid pressure in the pressure chamber (24) to be built up via a fluid feed device (34) if the pilot-control device (3) is closed, **characterized in that** the control valve (2) has the fluid feed device (34), and **in that** the fluid feed device (34) has a sieve-like retaining device (35) and a throttle (36) for throughflow restriction.

2. Valve device according to Claim 1, **characterized in that** the displacement of the control valve (2) is provided by way of differential forces which act on the control valve (2).

3. Valve device according to one of the preceding claims, **characterized in that** the closed position of the control valve (2) is present when the magnet device (4) is switched off.

4. Valve device according to one of the preceding claims, **characterized in that** the control valve (2) has the pilot-control device (3).

5. Valve device according to one of the preceding claims, **characterized in that** the control valve (2) can be fixed in the closed position as a result of the fluid pressure.

6. Valve device according to one of the preceding claims, **characterized in that** the pressure relief of the pressure chamber (24) is provided in the direction of the outlet (6).

7. Valve device according to one of the preceding claims, **characterized in that** the pressure chamber (24) is separated in flow terms from the inlet (5) by means of a sealing device (31), in particular a cup seal (32).

8. Valve device according to one of the preceding claims, **characterized in that** the pilot-control device (3) has a pilot-control valve (21) with a pilot-control valve seat (22) which is arranged on the control valve (2) and/or a fluid outlet channel (25) which runs in the control valve (2) for pressure relief.

9. Valve device according to one of the preceding claims, **characterized in that** the pilot-control valve (21) is of smaller configuration than the control valve (2).

10. Valve device according to one of the preceding claims, **characterized in that**, if the pilot-control device (3) is open, the fluid feed device (34) has a lower fluid throughput than the fluid outlet channel (25).

11. Valve device according to one of the preceding claims, **characterized in that** the pilot-control valve (21) can be actuated by the magnet device (4) via a lifting rod (17) which is arranged in the control valve (2), the lifting rod (17) being assigned at least one driving element (38), by means of which the control valve (2) can be actuated when the pilot-control valve (21) is at least partially open.

12. Valve device according to one of the preceding claims, **characterized in that** the control valve (2) has outflow openings (26) which are arranged in a crown-shaped manner downstream of a control-valve seat (22).

13. Valve device according to one of the preceding claims, **characterized in that**, in an open position, the pilot-control valve (21) rests on a stop element (30) which is arranged, in particular, in the pressure chamber (24).

14. Valve device according to one of the preceding claims, **characterized in that** the stop element (30) is of elastic configuration, in particular is made from an elastomer material.

15. Method for operating a valve device (1), in particular according to one or more of the preceding claims, the valve device (1) having a fluid connection between at least one inlet (5) and at least one outlet (6), which fluid connection can be flowed through by a fluid in an open position of a pilot-controllable control valve (2) and is interrupted in a closed position, fluid pressure being built up in a pressure chamber (24) which adjoins the control valve (2) in order to displace the control valve (2) into the closed position, and it being provided for the pressure chamber (24) to be pressure-relieved by opening of a pilot-control device (3), and, in the case of a pressure-relieved pressure chamber (24), for the control valve (2) to be displaced into the open position with the use of a switchable magnet device (4), the opening of the pilot-control device (3) being carried out by means of the magnet device (4) which is assigned to the control valve (2), and the fluid pressure in the pressure chamber (24) being built up via a fluid feed device (34) if the pilot-control device (3) is closed, the control valve (2) having the fluid feed device (34), and the fluid feed device (34) having a sieve-like retaining device (35) and a throttle (36) for throughflow restriction.

## Revendications

1. Dispositif de soupape (1) comprenant une liaison fluidique entre au moins une entrée (5) et au moins une sortie (6) qui peut être parcourue par un fluide dans une position ouverte d'une soupape de commande pouvant être pilotée (2), et qui est interrompue dans une position fermée, pour le déplacement de la soupape de commande (2) dans la position fermée, une pression de fluide dans une chambre de pression (24) adjacente à la soupape de commande (2) pouvant être accrue, une détente de pression de la chambre de pression (24) étant prévue par l'ouverture d'un dispositif pilote (3), et en cas de détente de pression dans la chambre de pression (24), la soupape de commande (2) peut être déplacée dans la position ouverte en utilisant un dispositif magnétique commutable (4), l'ouverture du dispositif pilote (3) étant prévue au moyen du dispositif magnétique (4) associé à la soupape de commande (2) et la pression de fluide dans la chambre de pression (24) pouvant être accrue par le biais d'un dispositif d'alimentation en fluide (34) lorsque le dispositif pilote (3) est fermé, **caractérisé en ce que** la soupape de commande (2) présente le dispositif d'alimentation en fluide (34) et **en ce que** le dispositif d'alimentation en fluide (34) dispose d'un dispositif de retenue de type tamis (35) et d'un étranglement (36) pour limiter l'écoulement.

2. Dispositif de soupape selon la revendication 1, **caractérisé en ce que** le déplacement de la soupape de commande (2) est prévu par des forces différentielles agissant sur la soupape de commande (2).

3. Dispositif de soupape selon l'une quelconque des revendications précédentes, **caractérisé en ce que** la position fermée de la soupape de commande (2) a lieu lorsque le dispositif magnétique (4) est déconnecté.

4. Dispositif de soupape selon l'une quelconque des revendications précédentes, **caractérisé en ce que** la soupape de commande (2) présente le dispositif pilote (3).

5. Dispositif de soupape selon l'une quelconque des revendications précédentes, **caractérisé en ce que** la soupape de commande (2) peut être fixée dans la position fermée du fait de la pression de fluide.

6. Dispositif de soupape selon l'une quelconque des revendications précédentes, **caractérisé en ce que** la détente de pression de la chambre de pression (24) est prévue dans la direction de la sortie (6).

7. Dispositif de soupape selon l'une quelconque des revendications précédentes, **caractérisé en ce que** la chambre de pression (24) est séparée au moins en partie fluidiquement au moyen d'un dispositif d'étanchéité (31), notamment une manchette à coupelle (32), de l'entrée (5).

8. Dispositif de soupape selon l'une quelconque des revendications précédentes, **caractérisé en ce que** le dispositif pilote (3) présente une soupape pilote (21) avec un siège de soupape pilote (22) disposé sur la soupape de commande (2) et/ou présente un canal de sortie de fluide (25), pour la détente de pression, s'étendant dans la soupape de commande (2).

9. Dispositif de soupape selon l'une quelconque des revendications précédentes, **caractérisé en ce que** la soupape pilote (21) est réalisée de manière plus petite que la soupape de commande (2).

10. Dispositif de soupape selon l'une quelconque des revendications précédentes, **caractérisé en ce que** le dispositif d'alimentation en fluide (34), lorsque le dispositif pilote (3) est ouvert, présente un débit fluidique inférieur à celui du canal de sortie de fluide (25).

11. Dispositif de soupape selon l'une quelconque des revendications précédentes, **caractérisé en ce que** la soupape pilote (21) peut être actionnée par le biais d'une tige de levage (17) disposée dans la soupape de commande (2) par le dispositif magnétique (4), la tige de levage (17) étant associée à au moins un élément d'entraînement (38) au moyen duquel la soupape de commande (2) peut être actionnée lorsque la soupape pilote (21) est au moins en partie ouverte.

12. Dispositif de soupape selon l'une quelconque des revendications précédentes, **caractérisé en ce que** la soupape de commande (2) présente, en aval d'un siège de soupape de commande (22), des ouvertures d'évacuation (26) disposées en forme de couronne.

13. Dispositif de soupape selon l'une quelconque des revendications précédentes, **caractérisé en ce que** la soupape pilote (21) repose dans une position ouverte sur un élément de butée (30) notamment disposé dans la chambre de pression (24).

14. Dispositif de soupape selon l'une quelconque des revendications précédentes, **caractérisé en ce que** l'élément de butée (30) est réalisé sous forme élastique, notamment en un matériau élastomère.

15. Procédé pour faire fonctionner un dispositif de soupape (1), en particulier selon l'une quelconque ou plusieurs des revendications précédentes, dans lequel le dispositif de soupape (1) présente une liaison fluidique entre au moins une entrée (5) et au moins une sortie (6) qui peut être parcourue par un fluide dans une position ouverte d'une soupape de commande pouvant être pilotée (2), et qui est interrompue dans une position fermée, pour le déplacement de la soupape de commande (2) dans la position fermée, une pression de fluide dans une chambre de pression (24) adjacente à la soupape de commande (2) étant accrue, et dans lequel il est prévu de détendre en pression la chambre de pression (24) par ouverture d'un dispositif pilote (3) et, lorsque la chambre de pression (24) est détendue en pression, de déplacer dans la position ouverte la soupape de commande (2) en utilisant un dispositif magnétique (4) commutable, l'ouverture du dispositif pilote (3) étant effectuée au moyen du dispositif magnétique (4) associé à la soupape de commande (2), et la pression de fluide dans la chambre de pression (24) étant accrue lorsque le dispositif pilote (3) est fermé par le biais d'un dispositif d'alimentation en fluide (34), la soupape de commande (2) présentant le dispositif d'alimentation en fluide (34) et le dispositif d'alimentation en fluide (34) disposant d'un dispositif de retenue de type tamis (35) et d'un étranglement (36) pour la limitation de l'écoulement.
